# EUROPÄISCHE PATENTSCHRIFT

(11) **EP 1 305 553 B1**
(45) Veröffentlichungstag und Bekanntmachung des Hinweises auf die Patenterteilung: **29.09.2004**
(21) Anmeldenummer: 01953873.5
(22) Anmeldetag: 05.07.2001
(51) Int. Cl.: F23N 5/10, F24C 3/12, A21B 3/04

(54) **VERBRENNUNGSSYSTEM FÜR EIN GARGERÄT SOWIE GARGERÄT MIT SOLCH EINEM VERBRENNUNGSSYSTEM**
COMBUSTION SYSTEM FOR A COOKING APPLIANCE AND A COOKING APPLIANCE COMPRISING A COMBUSTION SYSTEM OF THIS TYPE
SYSTEME DE COMBUSTION POUR UN APPAREIL DE CUISSON ET APPAREIL DE CUISSON POURVU D'UN TEL SYSTEME DE COMBUSTION

(30) Priorität: 31.07.2000 DE 10037234
(43) Veröffentlichungstag der Anmeldung: 02.05.2003
(73) Patentinhaber: Rational AG, 86899 Landsberg a. Lech (DE)
(72) Erfinder: KÖGL, Rudolf, (DE); KOCH, Franz, 86836 Untermeitingen (DE); KLOUDA, Jaroslav, 82256 Fürstenfeldbruck (DE); OTMINGHAUS, Rainer, 86899 Landsberg (DE)
(74) Vertreter: Weber-Bruls, Dorothée, Dr.
(86) Internationale Anmeldenummer: PCT/DE2001/002531
(87) Internationale Veröffentlichungsnummer: WO 2002/010648

(56) Entgegenhaltungen:
- EP-A- 0 390 964
- EP-A- 0 532 339
- DE-A- 4 124 742
- DE-A- 19 718 399
- US-A- 4 457 291
- PATENT ABSTRACTS OF JAPAN vol. 1995, no. 09, 31. Oktober 1995 (1995-10-31) & JP 07 158841 A (MATSUSHITA ELECTRIC IND CO LTD), 20. Juni 1995 (1995-06-20)

## Beschreibung

Die Erfindung betrifft ein Verbrennungssystem für ein Gargerät, das eine Luftzufuhr mit einem Gebläse, eine über zumindest eine Düse in die Luftzufuhr mündende Brennstoffzufuhr mit zumindest einem Ventil, eine Zündeinrichtung zum Zünden einer Luft/Brennstoff-Mischung stromabwärts der Düse und eine Steuer- und/oder Regeleinrichtung zur Einstellung der Luft/Brennstoff-Mischung im Bereich der Zündeinrichtung umfaßt, sowie ein Gargerät mit solch einem Verbrennungssystem.

Verbrennungssysteme an sich sind im Stand der Technik gut bekannt. Eine Regeleinrichtung zur gleichsinnigen Regelung von Gas- und Verbrennungsluftzufuhr zu einem Brenner ist, beispielsweise, aus der EP 0 390 964 A2 bekannt, bei der ein Wärmebedarfsregler die Drehzahl eines die Verbrennungsluft liefernden Gebläses steuert, und ein der geförderten Verbrennungsluftmenge entsprechendes Differenzdrucksignal einem als verstärkender Servodruckregler ausgewählten Steuermodul zugeführt wird, der den Steuerdruck für ein als Servoventil ausgebildetes Gasregelventil liefert.

Die JP 071 58 841 A offenbart ein gattungsgemäßes Verbrennungssystem, bei dem die Temperatur eines Teils einer Oberfläche eines Gargeräts auf einen Soll-Wert geregelt wird. Zum Zwecke der Regelung ist vorgesehen, dass sowohl die einem Verbrennungsbereich zugeführte Brenngasmenge als auch die zugeführte Luftmenge, insbesondere durch Variation der Drehzahl eines Gebläses, in Abhängigkeit von der Differenz zwischen dem Soll-Wert der Temperatur und der Ist-Temperatur besagten Oberflächenteils variiert werden.

Aufgabe der vorliegenden Erfindung ist es, dass gattungsgemäße Verbrennungssystem für ein Gargerät derart weiter zu entwickeln, das es die Nachteile des Stands der Technik überwindet, insbesondere eine optimale Wärmeabgabe an den Garraum des Gargeräts durch eine genau einstellbare Wärmezufuhr ermöglicht.

Diese Aufgabe wird erfindungsgemäß dadurch gelöst, dass die Steuer- und/oder Regeleinrichtung zumindest ein einen Garprozeßzustand, einen Gargerätezustand und/oder einen Gargutzustand repräsentierendes erstes Gar-Signal empfängt und/oder zumindest ein einen Garprozeßzustand, einen Gargerätezustand und/oder einen Gargutzustand einstellendes zweites Gar-Signal ausgibt, und die Steuer- und/oder Regeleinrichtung die Luft/Brennstoff-Mischung über die Drehzahl des Gebläses einstellt, wobei die Menge an Brennstoff durch Dimensionierung der Austrittsöffnung der Düse sowie die Einstellung des Ventils auf die Nennbelastung des Verbrennungssystems einmalig abstimmbar ist.

Dabei ist bevorzugt vorgesehen, dass die Steuer- und/oder Regeleinrichtung in Abhängigkeit von der Einstellung des Ventils in der Brennstoffzufuhr, zumindest einer, über eine Sensoreinrichtung erfaßbaren, vorzugsweise dynamischen, Luftgröße in der Luftzufuhr und/oder dem ersten Gar-Signal die Drehzahl des Gebläses verändert.

Eine Weiterentwicklung der Erfindung ist dadurch gekennzeichnet, dass die Steuer- und/oder Regeleinrichtung das Ventil in der Brennstoffzufuhr in Abhängigkeit von dem ersten Gar-Signal und/oder zumindest einer über eine Sensoreinrichtung erfaßbaren, vorzugsweise dynamischen, Luftgröße in der Luftzufuhr einstellt, wobei vorzugsweise beim Überschreiten eines ersten Wertes für die dynamische Luftgröße das Ventil zu öffnen und beim Unterschreiten eines zweiten Wertes für die dynamische Lufgröße das Ventil zu schließen ist.

Erfindungsgemäß kann vorgesehen sein, dass die dynamische Luftgröße durch den Luftvolumenstrom, den Luftdurchfluß und/oder den Luftdruck, der im wesentlichen aus dem Quadrat der Luftgeschwindigkeit multipliziert mit der Luft- Rohdichte bestimmbar und insbesondere über eine Prallfläche oder eine Verengung in der Luftzufuhr erfaßbar ist, dargestellt ist.

Mit der Erfindung wird bevorzugt auch vorgeschlagen, dass das zweite Gar-Signal über die Drehzahl des Gebläses veränderbar ist.

Erfindungsgemäß kann weiterhin vorgesehen sein, dass die Temperatur, die Feuchte und /oder die Umwälzrate im Garraum über das zweite Gar-Signal einstellbar ist bzw. sind.

Ferner betrifft die Erfindung ein Gargerät mit einem Garraum, einer Heizeinrichtung, einer Einrichtung zum Einführen von Feuchtigkeit in den Garraum, einem Ablauf aus dem Garraum, einem Abzug aus dem Garraum, einer Steuer und/oder Regeleinheit für den Garablauf und einem erfindungsgemäßen Verbrennungssystem.

Dabei kann vorgesehen sein, dass die Steuer- und/oder Regeleinrichtung des Verbrennungssystems in einem mit der Steuer- und/oder Regeleinheit des Gargeräts ausgebildet ist.

Schließlich wird erfindungsgemäß auch vorgeschlagen, dass die Steuer- und/oder Regeleinrichtung mit dem Gebläse, der Heizeinrichtung, der Einrichtung zum Einführen von Feuchtigkeit in den Garraum, einer Einrichtung zum zumindest teilweisen Verschließen des Ablaufs und/oder einer Einrichtung zum zumindest teilweise Verschließen des Abzugs verbunden ist.

Der Erfindung liegt somit die überraschende Erkenntnis zugrunde, dass die Menge an Brennstoff und Luft in einem erfindungsgemäßen Verbrennungssystem sich im gleichen Verhältnis ändert, wodurch über einen weiten Belastungsbereich eine konstante Luftzahl mit schadstoffarmer Emission gefahren werden kann, indem die Menge an Brennstoff durch Dimensionierung der Austrittsöffnung einer Düse sowie der Einstellung eines Ventils in der Brennstoffzufuhr auf die Nennbelastung des Verbrennungssystems einmalig abstimmbar ist. Dem Garraum eines Gargerätes mit solch einem erfindungsgemäßen Verbrennungssystem ist somit vorzugsweise geregelt Wärme zuführbar durch Verändern der Drehzahl des Gebläses eines Verbrennungssystems in Abhängigkeit von einer Luftgröße in der Luftzufuhr des Verbrennungssystems, wie dem dynamischen Luftdruck, und gegebenenfalls einer Garraum-, Garprozeß- und/oder Gargutzustandsgröße bei einer auf die Nennbelastung abgestimmten Einstellung eines Ventils in der Brennstoffzufuhr des Verbrennungssystems. Auch kann erfindungsgemäß über die Drehzahl des Gebläses eine Garraum-, Garprozeß- und/oder Gargutzustandsgröße eingestellt werden.

Bevorzugt ist es erfindungsgemäß auch, dass Brennstoff nur dann mit Luft im Verbrennungssystem gemischt wird, wenn in Abhängigkeit von der Drehzahl des Gebläses eine bestimmte Luftgröße überschritten ist.

Handelt es sich bei der erfaßten Luftgröße um den dynamischen Druck, erfaßbar beispielsweise über die Wirkung eines Luftstromes in der Luftzufuhr auf eine Prallfläche, so ist derselbe auch von der Luft-Rohdichte abhängig, wodurch automatisch Druckunterschiede aufgrund einer unterschiedlichen Meereshöhe, Feuchtigkeit, Zusammensetzung und dergleichen der Luft am jeweiligen Aufstellungsort eines Gargerätes für die Wärmeabgabe in den Garraum kompensiert werden. Selbstverständlich kann es sich bei dem dynamischen Druck um ein Überdruck oder Unterdruck handeln, wobei Letzterer unter Einsatz einer Verengung in der Luftzufuhr erfaßbar ist.

Erfindungsgemäß wird insgesamt die Sicherheit des Verbrennungssystems erhöht und die Schadstoffemission desselben erniedrigt.

Weitere Merkmale und Vorteile der Erfindung ergeben sich aus der nachfolgenden Beschreibung, in der Ausführungsbeispiele der Erfindung anhand von schematischen Zeichnungen im Einzelnen erläutert werden. Dabei zeigt:
- Fig. 1: ein Blockdiagramm eines erfindungsgemäßen Verbrennungssystems; und
- Fig. 2: ein Blockdiagramm eines weiteren erfindungsgemäßen Verbrennungssystems.

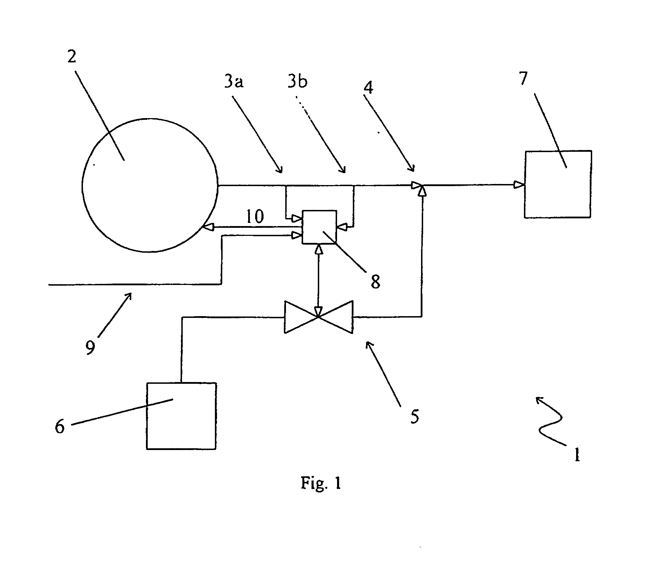

Wie Fig. 1 zu entnehmen ist, umfaßt ein erfindungsgemäßes Verbrennungssystem 1 in seiner Luftzufuhr ein Gebläse 2 sowie zwei Druckmeßsensoren 3a, 3b stromaufwärts einer Brennstoffdüse 4, die unter Zwischenschaltung eines Ventils 5 über eine Brennstoffquelle 6 speisbar ist. Stromabwärts der Brennstoffdüse 4 ist ein nicht dargestellter Zünder und schließlich ein Brennerausgang 7 zum Abgeben von Wärme an einen nicht dargestellten Garraum angeordnet. Die Druckmeßsensoren 3a, 3b und das Ventil 5 sind mit einer Regeleinrichtung 8 verbunden, der auch Regelgrößen 9 beispielsweise von einem nicht dargestellten Garprozeßfühler, wie er in der nicht vorveröffentlichten DE 199 45 021 beschrieben ist, zuführbar sind, während die Regeleinrichtung 8 eine Stellgröße 10 an das Gebläse 2 ausgibt und das Öffnen und Schließen des Ventils 5 bewirkt.

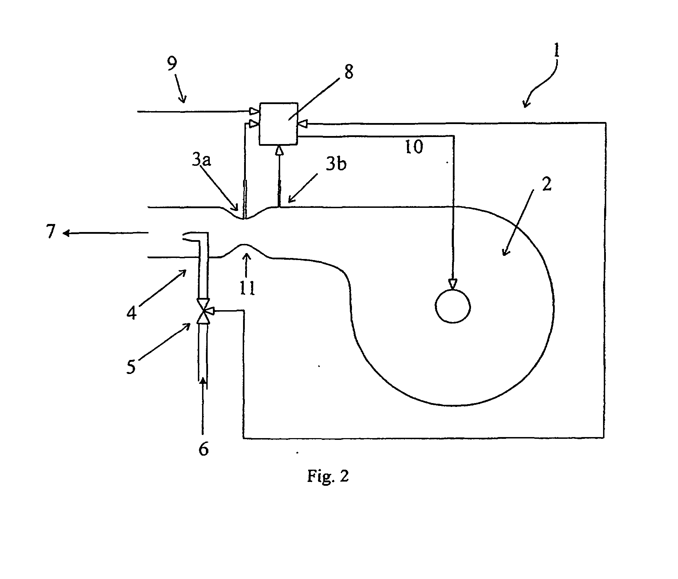

Das in Fig. 2 dargestellte Verbrennungssystem 1 unterscheidet sich nicht grundsätzlich von dem gemäß Fig. 1, so dass gleiche Teile durch gleiche Bezugszeichen gekennzeichnet sind. Es ist vor allem darauf hinzuweisen, dass beim Ausführungsbeispiel gemäß Fig. 2 im Bereich einer Verengung 11 in der Luftzufuhr über die Druckmeßsensor 3a, 3b ein dynamischer Unterdruck erfaßbar ist, der sich aus dem Produkt aus der Luft-Rohdichte, die abhängig vom jeweiligen Druck, der Meereshöhe, der Feuchte sowie der Zusammensetzung der zugeführten Luft ist, und dem Quadrat der Luftgeschwindigkeit ergibt.

Das erfindungsgemäße Verbrennungssystem 1 ermöglicht eine geregelte Wärmeabgabe an den Garraum, der stromabwärts des Brennerausgangs 7 angeordnet ist. Zu diesem Zweck wird bei geöffnetem Ventil 5 in Abhängigkeit von dem Meßergebnis der Druckmeßsensoren 3a, 3b über die Regeleinrichtung 8, also die von derselben ausgegebenen Stellgröße 10, die Drehzahl des Gebläses 2 und somit die Luft/Brennstoff-Mischung stromabwärts der Brennstoffdüse 4 sowie letztendlich die abgebbare Wärmemenge eingestellt. Zusätzlich kann eine im Garraum über den Garprozeßfühler erfaßte Größe, wie die Temperatur, die Feuchte oder die Umwälzrate im Garraum, der Regeleinrichtung 8 in Form der Regelgröße 9 zur weiteren Optimierung der Wärmeabgabe an den Garraum in Abhängigkeit vom Gargerätzustand, Garprozeßzustand und/oder Gargutzustand eingestellt werden.

Aus Sicherheitsgründen ist es ferner bevorzugt, dass das Ventil 5 nur dann offen ist, wenn die Drehzahl des Gebläses 2 einen vorherbestimmten Wert überschritten hat, wie über die Druckmeßsensoren 3a, 3b erfaßbar.

Zusätzlich zu dem oben beschriebenen Betrieb eines Gargeräts kann es erfindungsgemäß auch vorgesehen sein, dass über die Drehzahl des Gebläses 2 auch ein Gargerätezustand, Garprozeßzustand und/oder Gargutzustand von der Regeleinrichtung 8 über eine nicht dargestellte Heizeinrichtung, Einrichtung zur Einführung von Feuchtigkeit, Einrichtung zum zumindest teilweise Schließen eines Ablaufs aus dem Garraum und/oder Einrichtung zum zumindest teilweise Schließen eines Abzugs aus dem Garraum einstellbar ist.

## Patentansprüche

1. Verbrennungssystem (1) für ein Gargerät, das eine Luftzufuhr mit einem Gebläse (2), eine über zumindest eine Düse (4) in die Luftzufuhr mündende Brennstoffzufuhr mit zumindest einem Ventil (5), eine Zündeinrichtung zum Zünden einer Luft/Brennstoff-Mischung stromabwärts-der Düse (4) und eine Steuer- und/oder Regeleinrichtung (8) zur Einstellung der Luft/Brennstoff-Mischung im Bereich der Zündeinrichtung umfaßt, **dadurch gekennzeichnet, daß**
die Steuer- und/oder Regeleinrichtung (8) zumindest ein einen Garprozeßzustand, einen Gargerätezustand und/oder einen Gargutzustand repräsentierendes erstes Gar-Signal (9) empfängt und/oder zumindest ein einen Garprozeßzustand, einen Gargerätezustand und/oder einen Gargutzustand einstellendes zweites Gar-Signal ausgibt, und die Steuer- und/oder Regeleinrichtung (8) die Luft/Brennstoff-Mischung über die Drehzahl des Gebläses (2) einstellt, wobei die Menge an Brennstoff durch Dimensionierung der Austrittsöffnung der Düse (4) sowie die Einstellung des Ventils (5) auf die Nennbelastung des Verbrennungssystems (1) einmalig abstimmbar ist.

2. Verbrennungssystem nach Anspruch 1, **dadurch gekennzeichnet, daß**
die Steuer- und/oder Regeleinrichtung (8) in Abhängigkeit von der Einstellung des Ventils (5) in der Brennstoffzufuhr, zumindest einer, über eine Sensoreinrichtung (3a, 3b) erfaßbaren, vorzugsweise dynamischen, Luftgröße in der Luftzufuhr und/oder dem ersten Gar-Signal (9) die Drehzahl des Gebläses (2) verändert.

3. Verbrennungssystem nach Anspruch 1 oder 2, **dadurch gekennzeichnet, daß**
die Steuer- und/oder Regeleinrichtung (8) das Ventil (5) in der Brennstoffzufuhr in Abhängigkeit von dem ersten Gar-Signal (9) und/oder zumindest einer über eine Seusoreinrichtung (3a, 3b) erfaßbaren, vorzugsweise dynamischen, Luftgröße in der Luftzufuhr einstellt, wobei vorzugsweise beim Überschreiten eines ersten Wertes für die dynamische Luftgröße das Ventil zu öffnen und beim Unterschreiten eines zweiten Wertes für die dynamische Lufgröße das Ventil zu schließen ist.

4. Verbrennungssystem nach Anspruch 2 oder 3, **dadurch gekennzeichnet, daß**
die dynamische Luftgröße durch den Luftvolumenstrom, den Luftdurchfluß und/oder den Luftdruck, der im wesentlichen aus dem Quadrat der Luftgeschwindigkeit multipliziert mit der Luft- Rohdichte bestimmbar und insbesondere über eine Prallfläche oder eine Verengung (11) in der Luftzufuhr erfaßbar ist, dargestellt ist.

5. Verbrennungssystem nach einem der vorangehenden Ansprüche, **dadurch gekennzeichnet, daß**
das zweite Gar-Signal über die Drehzahl des Gebläses veränderbar ist.

6. Verbrennungssystem nach einem der vorangehenden Ansprüche, **dadurch gekennzeichnet, daß**
die Temperatur, die Feuchte und /oder die Umwälzrate im Garraum über das zweite Gar-Signal einstellbar ist bzw. sind.

7. Gargerät mit einem Garraum, einer Heizeinrichtung, einer Einrichtung zum Einführen von Feuchtigkeit in den Garraum, einem Ablauf aus dem Garraum, einem Abzug aus dem Garraum, einer Steuer- und/oder Regeleinheit für den Garablauf und einem Verbrennungssystem nach einem der vorangehenden Ansprüche.

8. Gargerät nach Anspruch 7, **dadurch gekennzeichnet, daß**
die Steuer- und/oder Regeleinrichtung des Verbrennungssystems in einem mit der Steuer- und/oder Regeleinheit des Gargeräts ausgebildet ist.

9. Gargerät nach Anspruch 7 oder 8, **dadurch gekennzeichnet, daß**
die Steuer- und/oder Regeleinrichtung mit dem Gebläse, der Heizeinrichtung, der Einrichtung zum Einführen von Feuchtigkeit in den Garraum, einer Einrichtung zum zumindest teilweisen Verschließen des Ablaufs und/oder einer Einrichtung zum zumindest teilweise Verschließen des Abzugs verbunden ist.

## Claims

1. A combustion system (1) for a cooking appliance, comprising an air supply with a fan (2), a fuel supply with at least one valve (5), said fuel supply leading into the air supply via at least one nozzle (4), an ignition device for igniting an air and fuel mixture downstream of the nozzle (4), and an open loop and/or closed loop control device (8) for setting the air and fuel mixture in the region of the ignition device, **characterised in that** the open loop and/or closed loop control device (8) receives at least one first cooking signal (9) representing a cooking process state, a cooking appliance state and/or a food state and/or delivers at least one second cooking signal which adjusts a cooking process state, a cooking appliance state and/or a food state, and the open loop and/or closed loop control device (8) adjusts the air and fuel mixture by way of the speed of the fan (2), while the quantity of fuel can be adapted once and for all to the nominal load of the combustion system (1) by dimensioning of the exit opening of the nozzle (4) and the adjustment of the valve (5).

2. A combustion system according to claim 1, **characterised in that** the open loop and/or closed loop control device (8) changes the speed of the fan (2) in dependence on the adjustment of the valve (5) in the fuel supply, at least one preferably dynamic air variable in the air supply as detected via a sensor device (3a, 3b), and/or the first cooking signal (9).

3. A combustion system according to claim 1 or 2, **characterised in that** the open loop and/or closed loop control device (8) adjusts the valve (5) in the fuel supply in dependence on the first cooking signal (9) and/or at least one preferably dynamic air variable in the air supply as detected by way of a sensor device (3a, 3b), the valve being opened preferably in the event of a first value for the dynamic air variable being exceeded and the valve being closed in the event of a second value for the dynamic air variable being undershot.

4. A combustion system according to claim 2 or 3, **characterised in that** the dynamic air variable is represented by the volumetric air flow, the air throughput and/or the air pressure, which can be determined basically from the square of the air speed multiplied by the air bulk density and which can be detected particularly via a baffle surface or a constriction (11) in the air supply.

5. A combustion system according to any one of the preceding claims, **characterised in that** the second cooking signal is variable by way of the fan speed.

6. A combustion system according to any one of the preceding claims, **characterised in that** the temperature, humidity and/or circulation rate in the cooking chamber is/are adjustable by way of the second cooking signal.

7. A cooking appliance with a cooking chamber, a heating device, a device for introducing moisture into the cooking chamber, an outlet from the cooking chamber, a flue out of the cooking chamber, an open loop and/or closed loop control unit for the cooking outlet and a combustion system according to any one of the preceding claims.

8. A cooking appliance according to claim 7, **characterised in that** the open loop and/or closed loop control device of the combustion system is constructed integrally with the open loop and/or closed loop control unit of the cooking appliance.

9. A cooking appliance according to claim 7 or 8, **characterised in that** the open loop and/or closed loop control device is connected to the fan, the heating device, the means for introducing moisture into the cooking chamber, a device for at least partial closure of the outlet and/or a device for at least partially closing the flow.

## Revendications

1. Système de combustion (1) pour un appareil de cuisson, comprenant une amenée d'air munie d'une soufflante (2), une amenée de combustible, débouchant dans l'amenée d'air par au moins une buse (4) et comprenant au moins une soupape (5), un dispositif d'allumage pour allumer un mélange air-combustible en aval de la buse (4), et un dispositif de commande et/ou de régulation (8) pour régler le mélange air/combustible dans la zone du dispositif d'allumage, **caractérisé en ce que**
le dispositif de commande et/ou de régulation (8) reçoit un premier signal de cuisson (9), représentant un état de processus de cuisson, un état d'appareil de cuisson et/ou un état de produit à cuire et/ou émet un deuxième signal de cuisson, réglant un état de processus de cuisson, un état d'appareil de cuisson et/ou un état de produit à cuire, et le dispositif de commande et/ou de régulation (8) règle le mélange air/carburant par le biais de la vitesse de rotation de la soufflante (2), sachant que la quantité de combustible peut être accordée initialement à la charge nominale du système de combustion (1), par un dimensionnement de l'ouverture de sortie de la buse (4) ainsi que par le réglage de la soupape (5).

2. Système de combustion selon la revendication 1, **caractérisé en ce que** le dispositif de commande et/ou de régulation (8) modifie la vitesse de rotation de la soufflante (2), en fonction du réglage de la soupape (5) montée dans l'amenée de combustible, en fonction d'au moins une grandeur d'air, de préférence dynamique, pouvant être détectée dans l'amenée d'air par un dispositif à capteur (3a, 3b) et/ou en fonction du premier signal de cuisson (9).

3. Système de combustion selon la revendication 1 ou 2, **caractérisé en ce que** le dispositif de commande et/ou de régulation (8) règle la soupape (5) montée dans l'amenée de combustible en fonction du premier signal de cuisson (9) et/ou d'au moins une grandeur d'air, de préférence, dynamique, pouvant être détectée par un dispositif à capteur (3a, 3b), dans l'amenée d'air, sachant que de préférence, en cas de dépassement d'une première valeur concernant la grandeur d'air dynamique, la soupape est ouverte et que, en cas de descente au-dessous d'une deuxième valeur, concernant la grandeur d'air dynamique, la soupape est à fermer.

4. Système de combustion selon la revendication 2 ou 3, **caractérisé en ce que** la grandeur d'air dynamique est représentée par le débit volume d'air, le débit traversant d'air et/ou la pression d'air, pouvant être déterminé essentiellement à partir du carré de la vitesse de l'air multiplié par la masse volumique brute de l'air et, en particulier, pouvant être détecté par l'intermédiaire d'une surface d'impact ou bien d'un étranglement (11) ménagé dans l'amenée d'air.

5. Système de combustion selon l'une des revendications précédentes, **caractérisé en ce que** le deuxième signal de cuisson est modifiable par le biais de la vitesse de rotation de la soufflante.

6. Système de combustion selon l'une des revendications précédentes, **caractérisé en ce que**
la température, l'humidité et/ou le taux de recirculation dans l'enceinte de cuisson est, respectivement sont, réglable(s) par le biais du deuxième signal de cuisson.

7. Appareil de cuisson muni d'une enceinte de cuisson, d'un dispositif de chauffage, d'un dispositif pour introduire de l'humidité dans l'enceinte de cuisson, d'une évacuation sortant de l'enceinte de cuisson, d'une extraction depuis l'enceinte de cuisson, d'une unité de commande et/ou de régulation pour le déroulement de la cuisson, et d'un système de combustion selon l'une des revendications précédentes.

8. Appareil de cuisson selon la revendication 7, **caractérisé en ce que** le dispositif de commande et/ou de régulation du système de combustion est réalisé d'un tout, avec l'unité de commande et/ou de régulation de l'appareil de cuisson.

9. Appareil de cuisson selon la revendication 7 ou 8, **caractérisé en ce que** le dispositif de commande et/ou de régulation est relié à la soufflante, au dispositif de chauffage, au dispositif d'introduction d'humidité dans l'enceinte de cuisson, à un dispositif de fermeture au moins partiel de l'évacuation et/ou à un dispositif de fermeture au moins partiel de l'extraction.
